# EUROPÄISCHE PATENTANMELDUNG

(11) **EP 2 805 985 A1**
(43) Veröffentlichungstag der Anmeldung: **26.11.2014**
(21) Anmeldenummer: 13168803.8
(22) Anmeldetag: 22.05.2013
(51) Int. Cl.: C08G 77/26

(54) **Hydroxysilan und Silangruppen-haltiges Polymer**

(71) Anmelder: Sika Technology AG, 6340 Baar (CH)
(72) Erfinder: Kramer, Andreas, 8006 Zürich (CH); Burckhardt, Urs, 8049 Zürich (CH); Stadelmann, Ursula, 8046 Zürich (CH)
(74) Vertreter: Sika Patent Attorneys

(57) **Zusammenfassung**

Die vorliegende Erfindung betrifft spezielle Hydroxysilane, erhältlich durch die Umsetzung von *β*-(3,4-Epoxycyclohexyl)alkyltrialkoxysilanen mit sekundären Aminen, sowie Addukte dieser Hydroxysilane, insbesondere in Form von Silangruppen-haltigen Polymeren.

Die Hydroxysilane sind in einem einfachen Prozess in hoher Reinheit herstellbar und sind nach der Herstellung sehr lagerstabil. Die damit zugänglichen Silangruppen-haltigen Polymere weisen vorteilhafte Eigenschaften auf. Sie ermöglichen insbesondere Isocyanatgruppen-freie feuchtigkeitshärtende Zusammensetzungen, welche geeignet sind als elastische Kleb- und Dichtstoffe.

## Beschreibung

### Technisches Gebiet

Die Erfindung betrifft Hydroxysilane und deren Anwendung in härtbaren Zusammensetzungen.

### Stand der Technik

Organosilane mit einer funktionellen Gruppe werden oft in Dichtstoffen, Klebstoffen und Beschichtungen eingesetzt. Sie dienen unter anderem als Haftvermittler oder Vernetzer, sowie als Aufbaukomponenten zur Herstellung von Silangruppen-haltigen Polymeren, auch "silanfunktionelle Polymere" oder "silanterminierte Polymere" oder "STP" genannt. Ein einfach durchführbarer und kommerziell attraktiver Weg zu Silangruppen-haltigen Polymeren führt über Isocyanatgruppen-haltige Polyurethanpolymere, welche mit geeigneten Organosilanen umgesetzt werden. Dazu werden am häufigsten Aminosilane eingesetzt. Allerdings weisen so hergestellte Polymere wegen der bei der Umsetzung mit dem Aminosilan gebildeten Harnstoffgruppen typischerweise hohe Viskositäten und/oder eine eingeschränkte Wärmebeständigkeit auf.

Bessere Eigenschaften in Bezug auf Viskosität und Wärmebeständigkeit weisen Silangruppen-haltige Polymere auf, in denen die Silangruppen über Urethan- anstelle von Harnstoffgruppen ans Polymer gebunden sind. Solche Systeme sind in der Gestalt von Umsetzungsprodukten aus Polyolen und Isocyanatosilanen bekannt. Dieser Weg ist kommerziell aber nur von beschränktem Interesse, da Isocyanatosilane teuer, wenig lagerfähig und stark toxisch sind. Grundsätzlich attraktiver erscheint der umgekehrte Weg zu Silangruppen-haltigen Polymeren mit Urethanbindungen, nämlich über die Umsetzung von Isocyanatgruppen-haltigen Polyurethanpolymeren mit Hydroxysilanen. Solche Polymere sind allerdings bisher kaum beschrieben worden. Dies liegt daran, dass die Herstellung von geeigneten Hydroxysilanen meist Schwierigkeiten bereitet, weil diese aufgrund einer schnellen Reaktion der Hydroxylgruppe mit der Silangruppe zur Selbstkondensation neigen und deshalb häufig sehr unrein und/oder wenig lagerstabil sind.

US 5,587,502 offenbart Hydroxylgruppen aufweisende Silane, erhalten durch Umsetzen von Aminosilanen mit cyclischen Alkylencarbonaten, und von diesen ausgehende Silangruppen-haltige Polymere. Diese Silangruppen-haltigen Polymere weisen unbefriedigende Wärmebeständigkeiten auf.

US 8,049,027 offenbart Additionsprodukte von Glycidylether-Epoxysilanen mit sekundären Aminen, wobei Mischungen aus cyclischen Siloxanen, Hydroxysilanen und oligomeren Kondensaten davon entstehen. Diese Hydroxysilane sind für die Herstellung von qualitativ hochwertigen Silangruppen-haltigen Polymeren nicht geeignet, da sie zu wenig rein sind.

### Darstellung der Erfindung

Aufgabe der vorliegenden Erfindung ist es daher, ein Hydroxysilan zur Verfügung zu stellen, welches in hoher Reinheit herstellbar ist und eine gute Lagerstabilität aufweist, so dass damit insbesondere Silangruppen-haltige Polymere mit guter Wärmebeständigkeit zugänglich sind.

Überraschenderweise wurde gefunden, dass ein Hydroxysilan nach Anspruch 1 diese Aufgabe löst. Es ist in einem einfachen Verfahren in sehr hoher Reinheit herstellbar und weist eine ausgezeichnete Lagerstabilität auf, auch mit Methoxygruppen am Silicium, welche sehr reaktiv sind und damit besonders empfindlich auf Selbstkondensation. Methoxy-funktionelle Silane sind wegen ihrer hohen Reaktivität als Bestandteil von härtbare Zusammensetzungen besonders interessant.

Neben anderen vorteilhaften Verwendungen sind mit dem Hydroxysilan nach Anspruch 1 in einem einfachen Verfahren ausgehend von Isocyanatgruppen-haltigen Polyurethanpolymeren niedrigviskose, gut lagerstabile Silangruppen-haltige Polymere zugänglich, welche mit Feuchtigkeit schnell zu einem elastischen Material mit guter Festigkeit, Dehnbarkeit und Wärmebeständigkeit aushärten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Hydroxysilan der Formel (I), 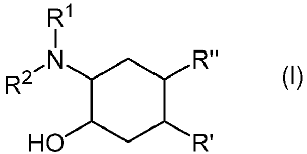 wobei
entweder R' für einen Rest der Formel (II) und R" für Wasserstoff oder R' für Wasserstoff und R" für einen Rest der Formel (II) stehen; 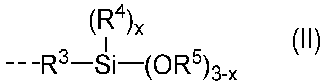 R¹ und R²
entweder einzeln jeweils für einen Alkylrest mit 1 bis 12 C-Atomen, welcher gegebenenfalls Heteroatome in Form von Ether-Sauerstoff, Thioether-Schwefel oder tertiärem Amin-Stickstoff aufweist,
oder zusammen für einen Alkylenrest mit 2 bis 12 C-Atomen, welcher gegebenenfalls Heteroatome in Form von Ether-Sauerstoff, Thioether-Schwefel oder tertiärem Amin-Stickstoff aufweist, stehen;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, steht;
R⁴ für eine Alkylgruppe mit 1 bis 8 C-Atomen steht;
R⁵ für eine Alkylgruppe mit 1 bis 10 C-Atomen, welche gegebenenfalls einen oder mehrere Ether-Sauerstoffe aufweist, steht; und
x für 0 oder 1 oder 2 steht.

Im vorliegenden Dokument werden mit dem Begriff "Silan" beziehungsweise "Organosilan" Verbindungen bezeichnet, welche einerseits mindestens eine, üblicherweise zwei oder drei, über Si-O-Bindungen direkt ans Siliciumatom gebundene Alkoxygruppen aufweisen, und andererseits mindestens einen über eine Si-C-Bindung direkt ans Siliciumatom gebundenen organischen Rest aufweisen.

Als "Silangruppe" wird die an den organischen Rest eines Silans gebundene Silicium-haltige Gruppe bezeichnet.

Als "Aminosilan", "Hydroxysilan", "Isocyanatosilan" und dergleichen werden Organosilane bezeichnet, welche am organischen Rest eine entsprechende funktionelle Gruppe, also eine Aminogruppe, Hydroxylgruppe oder Isocyanatgruppe, aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels G PC gegen Polystyrol als Standard bestimmt wird.

Eine gestrichelte Linie in den Formeln in diesem Dokument stellt jeweils die Bindung zwischen einem Substituenten und dem zugehörigen Molekülrest dar. Der Begriff "lagerstabil" bezeichnet die Eigenschaft einer Substanz oder einer Zusammensetzung, dass sie bei Raumtemperatur in einem geeigneten Gebinde während mehreren Wochen bis 6 Monate und mehr aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von ca. 23 °C bezeichnet.

Das Hydroxysilan der Formel (I) entspricht entweder der Formel (I a) oder der Formel (I b).

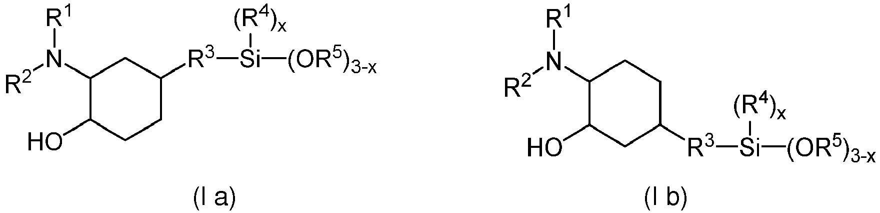

In den Formeln (I a) und (I b) weisen R¹, R², R³, R⁴, R⁵ und x die bereits genannten Bedeutungen auf.

Die Formeln (I a) und (I b) umfassen alle für die jeweilige Struktur möglichen Diastereomere.

R¹ und R² stehen bevorzugt
entweder einzeln jeweils für einen Alkylrest mit 3 bis 10 C-Atomen, welcher gegebenenfalls einen oder zwei Ether-Sauerstoffe aufweist,
oder zusammen für einen Alkylenrest mit 4 bis 8 C-Atomen, welcher insbesondere ein Heteroatom in Form von Ether-Sauerstoff, Thioether-Schwefel oder tertiären Amin-Stickstoff aufweist und bilden dabei unter Einbezug des Stickstoffatoms, welches in Formel (I) dargestellt ist, einen 5- oder 6- oder 7
Ring, insbesondere einen 5- oder 6-Ring.

R¹ und R² stehen besonders bevorzugt
entweder einzeln für 2-Methoxyethyl, 2-Ethoxyethyl, 3-Methoxypropyl, 3-Ethoxypropyl, 2-(2-Methoxyethoxy)ethyl, 2-Octyloxyethyl, Ethyl, Propyl, Isopropyl, Butyl, Isobutyl, sek.Butyl, 2-Ethylhexyl, oder N,N-Dimethylaminopropyl,
oder zusammen unter Einbezug des Stickstoffatoms für einen, gegebenenfalls substituierten, Pyrrolidin-, Piperidin-, Hexamethylenimin-, Morpholin-, Thiomorpholin- oder 4-Methylpiperazin-Ring.

Ganz besonders bevorzugt stehen R¹ und R² einzeln jeweils für 2-Methoxyethyl, Butyl oder Isopropyl, oder zusammen unter Einbezug des Stickstoffatoms für Morpholin, 2,6-Dimethylmorpholin, Thiomorpholin, Pyrrolidin oder 4-Methylpiperazin.

Am meisten bevorzugt stehen R¹ und R² unter Einbezug des Stickstoffatoms für Morpholin oder Pyrrolidin.

Diese Hydroxysilane sind in besonders reiner Qualität herstellbar und besonders lagerstabil. Sie ermöglichen Silangruppen-haltige Polymere mit guter Wärmebeständigkeit.
R³ steht bevorzugt für einen linearen oder verzweigten Alkylenrest mit 1 bis 6 C-Atomen, besonders bevorzugt für einen Ethylenrest.
R⁴ steht bevorzugt für eine Methylgruppe.
R⁵ steht bevorzugt für eine Methylgruppe oder eine Ethylgruppe oder eine Hept-3,6-dioxa-1-ylgruppe, besonders bevorzugt für eine Methylgruppe oder eine Ethylgruppe.
Hydroxysilane mit diesen bevorzugten Resten R³, R⁴ und R⁵ sind besonders gut zugänglich.
R⁵ steht insbesondere für eine Methylgruppe. Diese Hydroxysilane sind mit Feuchtigkeit besonders reaktiv. Damit sind Silangruppen-haltige Polymere mit besonders schneller Aushärtung erhältlich.
R⁵ steht weiterhin insbesondere für eine Ethylgruppe. Diese Hydroxysilane spalten bei ihrer Aushärtung kein Methanol ab, was aus toxikologischen Gründen vorteilhaft ist.

Bevorzugt steht x für 1 oder 0, insbesondere für 0. Diese Hydroxysilane hydrolysieren bei Kontakt mit Feuchtigkeit besonders schnell und ermöglichen Silangruppen-haltige Polymere mit besonders guten mechanischen Eigenschaften.

Ein weiterer Gegenstand der Erfindung ist ein Verfahren zur Herstellung eines Hydroxysilans der Formel (I) durch Umsetzung mindestens eines Epoxysilans der Formel (III) mit mindestens einem Amin der Formel (IV).

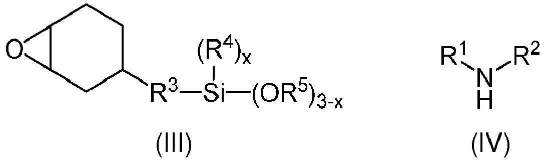

In den Formeln (III) und (IV) weisen R¹, R², R³, R⁴, R⁵ und x die bereits genannten Bedeutungen auf.

Das Amin der Formel (IV) kann dabei entweder an den Kohlenstoff in β-oder in γ-Stellung zur Silangruppe addiert werden, wodurch entweder ein Hydroxysilan der Formel (I a), bei dem der Silanrest in 4-Stellung bezogen auf die Hydroxylgruppe steht, oder ein Hydroxysilan der Formel (I b), bei dem der Silanrest in 5-Stellung bezogen auf die Hydroxylgruppe steht, entsteht. Aus diesem Verfahren werden typischerweise Mischungen aus den zwei Hydroxysilanen der Formel (I a) und (I b) erhalten.

Die Umsetzung wird bevorzugt bei Temperaturen im Bereich von 50 bis 140 °C, insbesondere 70 bis 120 °C, durchgeführt. Bei der Umsetzung kann ein Katalysator eingesetzt werden, insbesondere ein Imidazol, ein Hydroxyalkylamin, ein Alkohol, ein Phenol, eine Brønsted-Säure wie insbesondere Essigsäure oder Methansulfonsäure, eine Lewis-Säure wie insbesondere Aluminium(III)-acetylacetonat, Aluminium(III)-isopropoxid, Aluminium(III)-ethoxid, Lanthan(III)-triflat, Zinkdichlorid oder Zink-bis(ethylhexanoat), oder ein Metallsalz wie insbesondere Natriumdodecylsulfat oder Lithiumperchlorat. Das Amin der Formel (IV) wird bevorzugt in einem leicht überstöchiometrischen oder stöchiometrischen Verhältnis zum Epoxysilan der Formel (III) eingesetzt. Insbesondere wird mit einem Amin/Epoxysilan-Verhältnis im Bereich von 1.3 bis 1.0 gearbeitet. Die Umsetzung kann lösemittelfrei oder in einem geeigneten Lösemittel erfolgen. Bevorzugt werden nach der Umsetzung allfällig vorhandene flüchtige Verbindungen, insbesondere Lösemittel, unreagierte Edukte oder freigesetztes Methanol oder Ethanol, destillativ aus dem Reaktionsprodukt entfernt.

Im bevorzugten Verfahren zur Herstellung des Hydroxysilans der Formel (I) entsteht dieses insbesondere in einer Reinheit von mindestens 90 Gewichts-%, bevorzugt mindestens 95 Gewichts-%. Die hohe Reinheit des Hydroxysilans der Formel (I) ist besonders überraschend, weisen Hydroxysilane nach dem Stand der Technik doch typischerweise Gehalte an Verunreinigungen von mehr als 10 Gewichts-% auf.

Als Epoxysilan der Formel (III) wird bevorzugt ein β-(3,4-Epoxycyclohexyl)-ethyltrialkoxysilan eingesetzt. Besonders geeignet sind β-(3,4-Epoxycyclohexyl)ethyltrimethoxysilan, kommerziell erhältlich beispielsweise als Silquest^{®} A-186 von Momentive, sowie weiterhin β-(3,4-Epoxycyclohexyl)ethyltriethoxysilan, kommerziell erhältlich beispielsweise als Coatosil^{®}-1770 von Momentive.

Als Amin der Formel (IV) geeignet sind insbesondere Bis(2-methoxyethyl)amin, Bis(2-ethoxyethyl)amin, Bis(3-methoxypropyl)amin, Bis(3-ethoxypropyl)amin, Bis(2-(2-methoxyethoxy)ethyl)amin, Bis(2-octyloxyethy)amin, Diethylamin, Dipropylamin, Diisopropylamin, Dibutylamin, Diisobutylamin, Di-sek.-butylamin, Di-2-ethylhexylamin, N-Methylbutylamin, N-Ethylbutylamin, Bis(3-(N,N-dimethylamino)propyl)amin, Pyrrolidin, Piperidin, 2-Methylpiperidin, Hexamethylenimin (= Azepan), Morpholin, 2,6-Dimethylmorpholin, Thiomorpholin und 4-Methylpiperazin.

Davon bevorzugt sind Bis(2-methoxyethyl)amin, Dibutylamin, Diisopropylamin, Morpholin, 2,6-Dimethylmorpholin, Thiomorpholin, Pyrrolidin und 4-Methylpiperazin. Am meisten bevorzugt sind Morpholin und Pyrrolidin.

Mit diesen Aminen werden besonders reine Hydroxysilane der Formel (I) erhalten und die Hydroxysilane sind besonders lagerstabil.

Besonders bevorzugte Hydroxysilane der Formel (I) sind 2-Bis(2-methoxyethyl)amino-4-(2-triethoxysilylethyl)cyclohexan-1-ol, 2-Dibutylamino-4-(2-tri-ethoxysilylethyl)cyclohexan-1-ol, 2-Diisopropylamino-4-(2-triethoxysilylethyl)-cyclohexan-1-ol, 2-Morpholino-4-(2-triethoxysilylethyl)cyclohexan-1-ol, 2-(2,6-Dimethylmorpholino)-4-(2-triethoxysilylethyl)cyclohexan-1-ol, 2-Thiomorpholino-4-(2-triethoxysilylethyl)cyclohexan-1-ol, 2-Pyrrolidino-4-(2-triethoxysilylethyl)cyclohexan-1-ol, 2-(4-Methylpiperazino)-4-(2-triethoxysilylethyl)cyclohexan-1-ol und die entsprechenden Verbindungen, bei welchen der Silanrest in 5-Stellung anstatt in 4-Stellung steht, und die entsprechenden Verbindungen mit Methoxygruppen anstelle von Ethoxygruppen am Silan.

Gemische aus zwei Verbindungen, deren Silanrest in 4- beziehungsweise in 5-Stellung steht, werden auch mit der Schreibweise " 4(5)" dargestellt. Eine Mischung aus 2-Morpholino-4-(2-triethoxysilylethyl)cyclohexan-1-ol und 2-Morpholino-5-(2-triethoxysilylethyl)cyclohexan-1-ol wird also auch als "2-Morpholino-4(5)-(2-trimethoxysilylethyl)cyclohexan-1-ol" bezeichnet.

Am meisten bevorzugt sind 2-Morpholino-4-(2-trimethoxysilylethyl)cyclohexan-1-ol, 2-Morpholino-4-(2-triethoxysilylethyl)cyclohexan-1-ol, 2-Pyrrolidino-4-(2-trimethoxysilylethyl)cyclohexan-1-ol und 2-Pyrrolidino-4-(2-triethoxysilylethyl)-cyclohexan-1-ol und die entsprechenden Verbindungen, bei welchen der Silanrest in 5-Stellung anstatt in 4-Stellung steht.

Besonders bervorzugt ist jeweils eine Mischungen aus den zwei Molekülen mit dem Silanrest in 4-Stellung und in 5-Stellung, also 2-Morpholino-4(5)-(2-trimethoxysilylethyl)cyclohexan-1-ol, 2-Morpholino-4(5)-(2-triethoxysilylethyl)cyclohexan-1-ol, 2-Pyrrolidino-4(5)-(2-trimethoxysilylethyl)cyclohexan-1-ol und 2-Pyrrolidino-4(5)-(2-triethoxysilylethyl)cyclohexan-1-ol.

Bevorzugt sind die Ethoxysilane. Bei ihrer Hydrolyse wird Ethanol freigesetzt, was aus toxikologischen Gründen vorteilhaft ist.

Das Hydroxysilan der Formel (I) ist unter Ausschluss von Feuchtigkeit sehr lagerstabil. Bei Raumtemperatur wird über einen Zeitraum von mehreren Monaten kaum eine Abnahme der Reinheit festgestellt, und zwar nicht nur für solche mit Ethoxygruppen, sondern überraschenderweise auch für Methoxygruppen enthaltende Hydroxysilane der Formel (I), welche deutlich reaktiver sind.

Die Schwierigkeit bei der Herstellung und Lagerung von Hydroxysilanen besteht grundsätzlich darin, dass eine Hydroxylgruppe mit einer Silangruppe unter Freisetzung des Alkohols R⁵-OH reagieren kann ("Selbstkondensation"). Dies ist prinzipiell sowohl intra- als auch intermolekular möglich, wobei entweder cyclische Silane oder höher kondensierte bzw. oligomere Silanverbindungen mit mehreren Siliciumatomen entstehen. Solche Verunreinigungen können bereits während der Herstellung von Hydroxysilanen oder während der Lagerung entstehen.

Die Silangruppen des Hydroxysilans der Formel (I) haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen), wobei der entsprechende Alkohol, beispielsweise Ethanol im Fall von Ethoxygruppen am Silicium, freigesetzt wird.

Bei der - zumindest partiellen - Hydrolyse von mindestens einem Hydroxysilan der Formel (I) werden Verbindungen mit mindestens einer Silanolgruppe der Formel (V) erhalten.

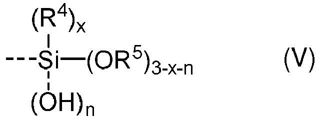

In der Formel (V) steht n für 1 oder 2 oder 3, mit der Massgabe, dass n höchstens den Wert (3-x) aufweist. R⁴, R⁵ und x weisen die bereits genannten Bedeutungen auf.

Derartige hydrolysierte oder partiell hydrolysierte Verbindungen mit Silanolgruppen der Formel (V) sind sehr reaktiv und können sehr schnell weiterreagieren, entweder durch Kondensation mit weiteren Silanolgruppen unter Bildung von Siloxangruppen (Si-O-Si-Gruppen) oder beispielsweise durch Kondensation mit Hydroxylgruppen eines Substrates.

Das Hydroxysilan der Formel (I) besitzt die Fähigkeit, eine starke Haftung zu diversen Substraten aufzubauen, beziehungsweise die Haftung von Zusammensetzungen enthaltend dieses Silan zu einem Substrat zu verbessern.

Das Hydroxysilan der Formel (I) kann vorteilhaft zur Herstellung von Addukten verwendet werden. Dabei wird es mit mindestens einer Verbindung, die mindestens eine, bevorzugt mindestens zwei, gegenüber Hydroxylgruppen reaktive Gruppen enthält, umgesetzt.

Ein weiterer Gegenstand der Erfindung ist ein Addukt, erhalten aus der Umsetzung eines Hydroxysilans der Formel (I) mit mindestens einer Verbindung, die mindestens eine, bevorzugt mindestens zwei, Reaktivgruppen ausgewählt aus der Gruppe bestehend aus Isocyanat-, Epoxid-, Acryl-, Methacryl-, Anhydrid-, Carbonsäure-, Ester-, Carbonat- und Cyclocarbonat-Gruppen, enthält.

Davon bevorzugt sind Isocyanat-, Anhydrid-, Carbonsäure-, Ester-, Carbonat-und Cyclocarbonat-Gruppen.

Besonders bevorzugt sind Verbindungen mit Isocyanatgruppen.

Die Umsetzung kann so durchgeführt werden, dass das Hydroxysilan der Formel (I) stöchiometrisch oder im stöchiometrischen Überschuss gegenüber den genannten Reaktivgruppen eingesetzt wird, wobei Addukte mit mindestens einer, bevorzugt mindestens zwei, Silangruppen erhältlich sind, welche weitgehend frei sind von den genannten Reaktivgruppen.

Die Umsetzung kann aber auch so durchgeführt werden, dass die Reaktivgruppen im stöchiometrischen Überschuss gegenüber dem Hydroxysilan der Formel (I) vorhanden sind.

Die Umsetzung zwischen dem Hydroxysilan der Formel (I) und der Verbindungen mit Reaktivgruppen erfolgt unter bekannten Bedingungen, wie sie für Reaktionen zwischen den an der jeweiligen Umsetzung beteiligten Reaktivgruppen typischerweise verwendet werden. Die Umsetzung erfolgt unter Verwendung eines Lösemittels oder bevorzugt lösemittelfrei. Gegebenenfalls können Hilfsstoffe wie beispielsweise Katalysatoren, Initiatoren, Trocknungsmittel oder Stabilisatoren mitverwendet werden. Die Umsetzung mit Isocyanatgruppen wird bevorzugt bei erhöhter Temperatur, beispielsweise bei 40 bis 100 °C, und in Anwesenheit von mindestens einem geeigneten Katalysator durchgeführt.

Besonders geeignete Verbindungen mit Isocyanatgruppen sind monomere und/oder oligomere aliphatische, cycloaliphatische, arylaliphatische oder aromatische Polyisocyanate, insbesondere 1,6-Hexamethylendiisocyanat, 1-Isocyanato-3,3,5-trimethyl-5-isocyanatomethyl-cyclohexan, 4,4'-, 2,4'- und 2,2'-Diphenylmethandiisocyanat und 2,4- und 2,6-Toluylendiisocyanat; Oligomere dieser Isocyanate enthaltend Uretdion-, Isocyanurat- oder Iminooxadiazindiongruppen; modifizierte Polyisocyanate enthaltend Ester-, Harnstoff-, Urethan-, Biuret-, Allophanat-, Carbodiimid-, Uretonimin- oder Oxadiazintriongruppen; sowie Isocyanatgruppen aufweisende Polyurethanpolymere, das heisst mehr als eine Isocyanatgruppe aufweisende Umsetzungsprodukte von Polyisocyanaten mit Polyolen, wie insbesondere mehrwertigen Alkoholen, Glykolen oder Aminoalkoholen, polyhydroxyfunktionellen Polyethern, Polyestern, Polyacrylaten, Polycarbonaten oder Polykohlenwasserstoffen, insbesondere Polyether, wie sie im Folgenden zur Herstellung von Isocyanatgruppen-haltigen Polyurethanpolymeren erwähnt sind; sowie Isocyanatosilane wie insbesondere 3-Isocyanatopropyltrimethoxysilan und 3-Isocyanatopropyltriethoxysilan.

Bei der - zumindest partiellen - Hydrolyse solcher Addukte entstehen Verbindungen mit Silanolgruppen der Formel (V), ebenso wie für die Hydroxysilane der Formel (I) beschrieben. Derartige hydrolysierte oder partiell hydrolysierte Addukte sind sehr reaktiv und können sehr schnell weiterreagieren, auf die gleiche Weise wie vorgängig beschrieben.

Sowohl das Hydroxysilan der Formel (I) als auch Addukte davon sind vorteilhaft verwendbar als Haftvermittler zwischen Kunststoffen und verschiedenen Substraten, zum Beschichten von Oberflächen, beispielsweise um deren Eigenschaften bezüglich Verschmutzungsneigung, Reinigungsfreundlichkeit usw. zu verbessern, und/oder als Trocknungsmittel. Sie können dazu als solche oder als Bestandteil von Lösungen oder Zusammensetzungen eingesetzt werden, beispielsweise als Vorbehandlungsmittel oder Aktivator, Grundierung oder Primer.

Geeignete Substrate für die Anwendung als Haftvermittler oder zum Beschichten ihrer Oberflächen sind insbesondere die im folgenden erwähnten Substrate **S1** und **S2**.

Besonders vorteilhaft ist die Verwendung eines Hydroxysilans der Formel (I) oder eines Adduktes davon als Bestandteil einer härtbaren Zusammensetzung. Die härtbare Zusammensetzung stellt dabei insbesondere eine Isocyanatgruppen aufweisende Polyurethanzusammensetzung, eine Epoxidharz-Zusammensetzung oder eine Silangruppen aufweisenden Zusammensetzung dar.

Solche härtbare Zusammensetzungen können insbesondere als Vergussmassen, Dichtstoffe, Klebstoffe, Beläge, Beschichtungen und Anstriche für Bau-und Industrieanwendungen eingesetzt werden.

Bevorzugt stellt die härtbare Zusammensetzung einen elastischen Klebstoff und/oder Dichtstoff dar.

Die härtbare Zusammensetzung kann weiterhin einen Aktivator oder einen Primer darstellen, welcher typischerweise mindestens ein Lösemittel und optional weitere Bestandteile wie insbesondere Katalysatoren, weitere Silane, Titanate und Zirkonate und gegebenenfalls Füllstoffe, Netzmittel, Polyisocyanate, Isocyanat- und/oder Silangruppen aufweisende Polyurethanpolymere oder Epoxidharze enthält.

Aus den vorgenannten Verwendungen des Hydroxysilans der Formel (I) oder eines Adduktes davon entsteht ein Artikel. Dieser Artikel stellt insbesondere ein Bauwerk des Hoch- oder Tiefbaus oder ein industrielles Gut dar.

Ein weiterer Gegenstand der Erfindung ist ein Polymer mit Endgruppen der Formel (VI), welches frei ist von Isocyanatgruppen und ein Addukt eines Hydroxysilans der Formel (I) darstellt.

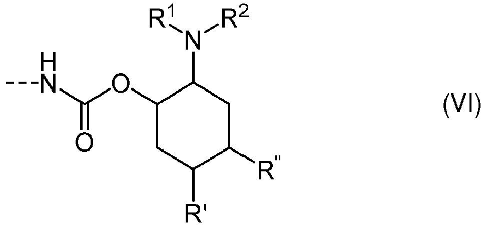

In der Formel (VI) weisen R', R", R¹, R², R³, R⁴, R⁵ und x die bereits genannten Bedeutungen auf.

Bevorzugt weist das Polymer mit Endgruppen der Formel (VI) ein Molekulargewicht im Bereich von 1'000 bis 30'000 g/mol, bevorzugt 2'000 bis 25'000 g/mol, besonders bevorzugt 3'000 bis 20'000 g/mol, und insbesondere von 4'000 bis 15'000 g/mol, auf. Ein solches Polymer ermöglicht gute mechanische Eigenschaften.

Bevorzugt weist das Polymer mit Endgruppen der Formel (VI) mehrheitlich Polyoxyalkyleneinheiten, besonders bevorzugt Polyoxyethylen- und/oder Polyoxypropyleneinheiten, insbesondere Polyoxypropyleneinheiten, auf. Ein solches Polymer weist eine tiefe Viskosität auf und ermöglicht gute mechanische Eigenschaften, insbesondere eine gute Elastizität, auch bei tiefen Temperaturen.

Die Endgruppen der Formel (VI) sind insbesondere mehrheitlich an cycloaliphatische Reste gebunden. Ein solches Polymer weist eine besonders gute Lichtstabilität und Stabilität gegenüber Verfärbung auf.

Bevorzugt weist das Polymer 1 bis 4, besonders bevorzugt 1 bis 3, insbesondere 2 oder 3, am meisten bevorzugt 2, Endgruppen der Formel (VI) auf. Ein solches Polymer ermöglicht gute mechanische Eigenschaften, insbesondere eine hohe Dehnbarkeit.

Das Polymer mit Endgruppen der Formel (VI) wird insbesondere erhalten durch die Umsetzung von mindestens einem Hydroxysilan der Formel (I) mit mindestens einem Isocyanatgruppen-haltigen Polyurethanpolymer.

Bei dieser Umsetzung werden die Hydroxylgruppen mindestens im stöchiometrischen, bevorzugt in einem leicht überstöchiometrischen Verhältnis, gegenüber den Isocyanatgruppen eingesetzt. Insbesondere wird ein OH/NCO-Verhältnis von 1.0 bis 1.25 verwendet. Die Umsetzung wird bevorzugt bei einer Temperatur im Bereich von 20 °C bis 120 °C, insbesondere 50 °C bis 100 °C, durchgeführt. Bevorzugt wird dabei mindestens ein Katalysator eingesetzt, insbesondere eine Bismut(III)-, Zink(II)-, Zirkonium(IV)- oder Zinn(II)-Verbindung oder eine Organozinn-Verbindung.

Zur Umsetzung mit mindestens einem Isocyanatgruppen-haltigen Polyurethanpolymer ist das Hydroxysilan der Formel (I) bevorzugt ausgewählt aus der Gruppe bestehend aus 2-Bis(2-methoxyethyl)amino-4-(2-triethoxysilylethyl)-cyclohexan-1-ol, 2-Dibutylamino-4-(2-triethoxysilylethyl)cyclohexan-1-ol, 2-Diisopropylamino-4-(2-triethoxysilylethyl)cyclohexan-1-ol, 2-Morpholino-4-(2-triethoxysilylethyl)cyclohexan-1-ol, 2-(2,6-Dimethylmorpholino)-4-(2-triethoxysilylethyl)cyclohexan-1-ol, 2-Thiomorpholino-4-(2-triethoxysilylethyl)cyclohexan-1-ol, 2-Pyrrolidino-4-(2-triethoxysilylethyl)cyclohexan-1-ol, 2-(4-Methylpiperazino)-4-(2-triethoxysilylethyl)cyclohexan-1-ol und die entsprechenden Verbindungen, bei welchen der Silanrest in 5-Stellung anstatt in 4-Stellung steht, und die entsprechenden Verbindungen mit Methoxygruppen anstelle von Ethoxygruppen am Silan.

Davon besonders bevorzugt sind 2-Morpholino-4-(2-trimethoxysilylethyl)cyclohexan-1-ol, 2-Morpholino-4-(2-triethoxysilylethyl)cyclohexan-1-ol, 2-Pyrrolidino-4-(2-trimethoxysilylethyl)cyclohexan-1-ol und 2-Pyrrolidino-4-(2-triethoxysilylethyl)cyclohexan-1-ol und die entsprechenden Verbindungen, bei welchen der Silanrest in 5-Stellung anstatt in 4-Stellung steht.

Am meisten bevorzugt sind jeweils Mischung aus dem Molekül mit dem Silanrest in 4- und in 5-Stellung, also 2-Morpholino-4(5)-(2-trimethoxysilylethyl)cyclohexan-1-ol, 2-Morpholino-4(5)-(2-triethoxysilylethyl)cyclohexan-1-ol, 2-Pyrrolidino-4(5)-(2-trimethoxysilylethyl)cyclohexan-1-ol und 2-Pyrrolidino-4(5)-(2-triethoxysilylethyl)cyclohexan-1-ol.

Mit diesen Hydroxysilanen werden Polymere mit niedriger Viskosität und guter Lagerstabilität erhalten, welche mit Feuchtigkeit schnell zu vernetzten Kunststoffen von hoher Festigkeit, Dehnbarkeit und guter Wärmestabilität aushärten.

Ein geeignetes Isocyanatgruppen-haltiges Polyurethanpolymer für diese Umsetzung wird insbesondere erhalten durch Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gewichts-%, bevorzugt 0.1 bis 2.5 Gewichts-%, besonders bevorzugt 0.2 bis 1 Gewichts-%, bezogen auf das gesamte Polymer verbleibt. Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5 / 1 bis 2.2 / 1, insbesondere 1.8 / 1 bis 2.0 / 1, erhalten werden. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Als Polyol für die Herstellung eines Isocyanatgruppen-haltigen Polyurethanpolymers geeignet sind insbesondere die folgenden handelsübliche Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Bevorzugt sind Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren). Besonders geeignet sind Polyoxyalkylendiole oder Polyoxyalkylentriole, insbesondere Polyoxyethylen- und Polyoxypropylendi- und -triole. Weiterhin besonders geeignet sind sogenannte Ethylenoxid-terminierte (EOendcapped) Polyoxypropylenpolyole. Letztere sind Polyoxyethylen-polyoxypropylen-Mischpolyole, die beispielsweise dadurch erhalten werden, dass Polyoxypropylenpolyole nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di-oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.

- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyoxyalkylenpolyole, Polyesterpolyole, Polycarbonatpolyole und Polyacrylatpolyole. Besonders bevorzugt sind Polyoxyalkylenpolyole.

Bevorzugte Polyoxyalkylenpolyole sind Polyoxypropylenpolyole und Polyoxyethylen-polyoxypropylen-Mischpolyole.

Das Polyol weist bevorzugt ein Molekulargewicht von 1'000 bis 20'000 g/mol, besonders bevorzugt von 2'000 bis 20'000 g/mol auf.

Das Polyol ist bevorzugt ein Diol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen-haltigen Polyurethan polymers mitverwendet werden.

Als Polyisocyanat für die Herstellung eines Isocyanatgruppen-haltigen Polyurethanpolymers geeignet sind insbesondere die folgenden handelsüblichen Polyisocyanate oder beliebige Mischungen davon:
Aliphatische Isocyanate wie insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat, sowie weiterhin aromatische Isocyanate wie insbesondere 2,4- und 2,6-Toluylendiisocyanat und beliebige Gemische dieser Isomeren (TDI), 4,4'-, 2,4'-und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat, sowie Oligomere und Polymere der vorgenannten Isocyanate, sowie beliebige Mischungen der vorgenannten Isocyanate.

Bevorzugte Polyisocyanate sind Diisocyanate. Besonders bevorzugt sind IPDI, HDI, MDI und TDI, insbesondere IPDI. Auf der Basis von IPDI sind Polymere mit Endgruppen der Formel (VI) erhältlich, die an cycloaliphatische Reste gebunden sind. Solche Polymere ermöglichen Zusammensetzungen mit besonders guter Lichtstabilität und Stabilität gegenüber Verfärbung.

Eine weitere Möglichkeit zur Herstellung eines Polymers mit Endgruppen der Formel (VI) besteht darin, dass das Hydroxysilan der Formel (I) mit einem Polyisocyanat so umgesetzt wird, dass ein Urethangruppen-haltiges Isocyanatosilan gebildet wird, welches seinerseits durch ungefähr stöchiometirsche Umsetzung mit einem geeigneten Polyol zum Polymer mit Endgruppen der Formel (VI) umgesetzt wird. Dabei kommen vorteihaft die als bevorzugt zur Herstellung eines Isocyanagruppen aufweisenden Polymers genannten Polyisocyanate und Polyole zum Einsatz.

Das Polymer mit Endgruppen der Formel (VI) ist unter Ausschluss von Feuchtigkeit sehr lagerstabil. Bei Kontakt mit Feuchtigkeit hydrolysieren die Endgruppen der Formel (VI), worauf das Polymer zu einem vernetzten Kunststoff aushärtet.

Somit betrifft die vorliegende Erfindung auch einen vernetzten Kunststoff, welcher durch die Reaktion mindestens eines Polymers mit Endgruppen der Formel (VI) mit Feuchtigkeit erhalten wird.

Das Polymer mit Endgruppen der Formel (VI) weist vorteilhafte Eigenschaften auf. Seine Viskosität ist vergleichsweise niedrig, was für seine weitere Verarbeitung, beispielsweise als feuchtigkeitshärtende Zusammensetzung, vorteilhaft ist. Es weist eine ausgezeichnete Lagerstabilität auf und härtet mit Feuchtigkeit schnell zu einem elastischen Material mit guter Festigkeit und Dehnbarkeit und guter Wärmebeständigkeit aus.

Das Polymer mit Endgruppen der Formel (VI) ist insbesondere verwendbar als Bestandteil einer härtbaren Zusammensetzung, insbesondere als Bestandteil einer feuchtigkeitshärtenden Zusammensetzung.

Eine solche feuchtigketshärtende Zusammensetzung enthält mindestens das Polymer mit Endgruppen der Formel (VI) und mindestens einen weiteren Bestandteil.

Bevorzugt weist die feuchtigkeitshärtende Zusammensetzung einen Gehalt an Polymer mit Endgruppen der Formel (VI) von 5 bis 90 Gewichts-%, insbesondere 10 bis 60 Gewichts-%, auf.

Als weitere Bestandteile sind insbesondere Katalysatoren, Vernetzer, Weichmacher, Füllstoffe, Pigmente, Lösemittel, Haftvermittler, Trocknungsmittel, Rheologiehilfsmittel, Flammschutzmittel und Stabilisatoren geeignet.

Bevorzugt enthält die feuchtigkeitshärtende Zusammensetzung mindestens einen Katalysator, der die Vernetzung von Silangruppen-haltigen Polymeren beschleunigt. Dafür geeignet sind insbesondere Metallkatalysatoren und/oder stickstoffhaltige Verbindungen.

Geeignete Metallkatalysatoren sind Verbindungen von Titan, Zirkonium, Aluminium und Zinn, insbesondere Organozinn-Verbindungen, Organotitanate, Organozirkonate und Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen und Dialkylpyrophosphatgruppen aufweisen.

Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie Alkylzinnthioester.

Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Ganz besonders geeignet sind Bis(ethylacetoacetato)-diisobutoxy-titan(IV), Bis(ethylacetoacetato)-diisopropoxy-titan(IV), Bis(acetylacetonato)-diisopropoxy-titan(IV), Bis(acetylacetonato)-diisobutoxy-titan(IV), Tris(oxyethyl)aminisopropoxy-titan(IV), Bis[tris(oxyethyl)amin]-diisopropoxy-titan(IV), Bis(2-ethylhexan-1,3-dioxy)-titan(IV), Tris[2-((2-aminoethyl)amino)ethoxy]-ethoxy-titan(IV), Bis(neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) und Snapcure^{®} 3020, 3030, 1020 (alle von Johnson Matthey & Brandenberger).

Ein besonders geeignetes Organoaluminat ist der kommerziell erhältliche Typ K-Kat 5218 (von King Industries).

Besonders geeignete Metallkatalysatoren sind weiterhin Titanate, Zirkonate und Aluminate mit Sulfonat- oder Phosphat- oder Pyrophosphat-Liganden. Besonders geeignete Titanate mit Sufonat-, Phosphat- oder Pyrophosphat-Liganden sind die kommerziell erhältlichen Typen Ken-React^{®} LICA^{®} 09, LICA^{®} 12, KR^{®} 212, LICA^{®} 38, LICA^{®} 38J, KR^{®} 238S, KR^{®} 262ES und KR^{®} 262ES (alle von Kenrich Petrochemicals).

Besonders geeignete Zirkonate mit Sufonat-, Phosphat- oder Pyrophosphat-Liganden sind die kommerziell erhältlichen Typen Ken-React^{®} NZ^{®} 09, NZ^{®} 12 und NZ^{®} 38 (alle von Kenrich Petrochemicals).

Ein besonders geeignetes Aluminat mit Phosphatligand ist das kommerziell erhältliche Ken-React^{®} KA^{®} 489 A (von Kenrich Petrochemicals).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxyanstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxy-silylpropyl)-4,5-dihydroimidazol.

Insbesondere geeignet sind auch Kombinationen verschiedener Katalysatoren, insbesondere Kombinationen aus mindestens einem Metallkatalysator und mindestens einer stickstoffhaltigen Verbindung.

Als Katalysator bevorzugt sind Organozinn-Verbindungen, Organotitanate, Amine, Amidine, Guanidine und Imidazole. Besonders bevorzugt sind Organotitanate und Amidine.

Weitere geeignete Bestandteile der feuchtigkeithärtenden Zusammensetzung sind insbesondere die folgenden Hilfs- und Zusatzmittel:
- Haftvermittler und/oder Vernetzer, insbesondere Silane wie die bereits als Katalysator erwähnten Aminosilane, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden Silane mit Ethoxygruppen anstelle der Methoxygruppen, sowie oligomere Formen dieser Silane;
- Weichmacher, insbesondere Carbonsäureester wie Phthalate, insbesondere Dioctylphthalat, Diisononylphthalat oder Diisodecylphthalat, hydrierte Phtalate, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester oder Polybutene;

- Lösemittel;
- anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe;
- Rheologiehilfsmittel, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Stabilisatoren gegen Oxidation, Wärme, Licht und UV-Strahlung;
- natürliche Harze, Fette oder Öle wie Kolophonium, Schellack, Leinöl, Rizinusöl und Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinol-bis(diphenylphosphat), Bisphenol-A-bis(diphenylphosphat) und Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in feuchtigkeitshärtenden Zusammensetzungen eingesetzte Substanzen.

Es kann sinnvoll sein, gewisse Bestandteile vor dem Einmischen in die feuchtigkeitshärtende Zusammensetzung chemisch oder physikalisch zu trocknen.

Die feuchtigkeitshärtende Zusammensetzung kann neben dem Polymer mit Endgruppen der Formel (VI) weitere Silangruppen-haltige Oligo- oder Polymere enthalten.

Die feuchtigkeitshärtende Zusammensetzung ist in einer bevorzugten Ausführungsform frei von Organozinn-Verbindungen. Dies kann aus ökologischen und/oder toxikologischen Gründen vorteilhaft sein.

Die feuchtigkeitshärtende Zusammensetzung setzt bei ihrer Aushärtung in einer weiteren bevorzugten Ausführungsform kein Methanol frei. Dies kann aus ökologischen und/oder toxikologischen Gründen vorteilhaft sein.

Die feuchtigkeitshärtende Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordung , wie insbesondere einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihrem Gebrauch relevanten Ausmass verändert. Üblicherweise wird die Lagerstabilität über die Messung der Viskosität oder der Auspresskraft ermittelt.

Die feuchtigkeitshärtende Zusammensetzung kann in Form einer einkomponentigen oder in Form einer zweikomponentigen Zusammensetzung vorliegen. Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist und mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden und welche jeweils für sich bei Raumtemperatur lagerstabil sind. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der feuchtigkeitshärtenden Zusammensetzung auf mindestens einen Festkörper oder Artikel kommen die vorhandenen Silangruppen in

Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen härtet die Zusammensetzung schliesslich aus. Dieser Vorgang wird auch als Vernetzung bezeichnet. Weiterhin können Silanolgruppen mit beispielsweise Hydroxylgruppen des Substrates, auf welches die Zusammensetzung appliziert ist, kondensieren, wodurch bei der Aushärtung eine ausgezeichnete Haftung der Zusammensetzung auf dem Substrat ausgebildet werden kann.

Das für die Aushärtung benötigte Wasser kann entweder aus der Luft stammen (Luftfeuchtigkeit), oder die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar.

Die Zusammensetzung verfügt im ausgehärteten Zustand über elastische Eigenschaften, insbesondere eine gute Festigkeit und hohe Dehnbarkeit, eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Montageklebstoff, Karrosserieklebstoff, Scheibenklebstoff, Sandwichelementklebstoff, Kaschierklebstoff, Laminatklebstoff, Verankerungsklebstoff, Bodenbelag und -beschichtung, Balkon- und Dachbeschichtung, Betonschutzbeschichtung, Parkhausbeschichtung sowie Schutzanstrich gegen Korrosion, als Versiegelung, Anstrich, Lack und Primer.

Besonders geeignet ist die feuchtigkeitshärtende Zusammensetzung als Klebstoff und/oder Dichtstoff, insbesondere für die Fugenabdichtung und für elastische Klebeverbindungen in Bau- und Industrieanwendungen.

Für eine Anwendung der Zusammensetzung als Dichtstoff, beispielsweise für Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.

Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff durch Kontakt mit Feuchtigkeit aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung der Zusammensetzung durch Kontakt mit Feuchtigkeit. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

### 1. Herstellung von Hydroxysilanen

**Hydroxysilan *HS-1***: 2-Morpholino-4(5)-(2-trimethoxysilylethyl)cyclohexan-1-ol In einem Rundkolben wurden 32.85 g (133.33 mmol) β-(3,4-Epoxycyclohexyl)-ethyltrimethoxysilan (Silquest^{®} A-186 von Momentive), 15.34 g (176.08 mmol) wasserfreies Morpholin und 0.10 g Lanthan(III)-triflat unter Stickstoffatmosphäre während 2h bei 110 °C gerührt, bis mittels Gaschromatographie kein Reaktionsfortschritt mehr festgestellt wurde. Das Rohprodukt wurde während 30 Minuten bei 80°C und ca. 1 mbar nachbehandelt. Es wurde ein flüssiges Produkt mit einem theoretischen OH-Equivalentgewicht von 333.5 g erhalten.

Das Produkt wies nach der Herstellung eine Reinheit von 98 bis 99 Gewichts-% auf (bestimmt mittels Gaschromatographie). Nach 3 Monaten Lagerung unter Feuchtigkeitsausschluss bei Raumtemperatur war die Reinheit unverändert.

**Hydroxysilan *HS-2*:** 2-Pyrrolidino-4(5)-(2-trimethoxysilylethyl)cyclohexan-1-ol Wie für das Hydroxysilan ***HS-1*** beschrieben wurden 32.85 Silquest^{®} A-186, 12.54 g Pyrrolidin und 0.10 g Lanthan(III)-triflat umgesetzt. Es wurde ein flüssiges Produkt mit einem theoretischen OH-Equivalentgewicht von 317.5 g erhalten, das nach einer Lagerzeit von 3 Monaten bei Raumtemperatur nicht merklich verändert war.

**Hydroxysilan *HS-3*:** 2-Dibutylamino-4(5)-(2-trimethoxysilylethyl)cyclohexan-1-ol

Wie für das Hydroxysilan ***HS-1*** beschrieben wurden 32.85 g Silquest^{®} A-186, 22.76 g Dibutylamin und 0.10 g Lanthan(III)-triflat umgesetzt. Es wurde ein flüssiges Produkt mit einem theoretischen OH-Equivalentgewicht von 375.6 g erhalten, das nach einer Lagerzeit von 3 Monaten bei Raumtemperatur nicht merklich verändert war.

**Hydroxysilan *HS-4*:** 2-Morpholino-4(5)-(2-triethoxysilylethyl)cyclohexan-1-ol In einem Rundkolben wurden 38.46 g (133.33 mmol) β-(3,4-Epoxycyclohexyl)-ethyltriethoxysilan (CoatOSil^{®} 1770 von Momentive), 15.34 g (176.08 mmol) wasserfreies Morpholin und 0.10 g Lanthan(III)-triflat unter Stickstoffatmosphäre während 2h bei 110 °C gerührt, bis mittels Gaschromatographie kein Reaktionsfortschritt mehr festgestellt wurde. Das Rohprodukt wurde während 30 Minuten bei 80°C und ca. 1 mbar nachbehandelt. Es wurde ein flüssiges Produkt mit einem theoretischen OH-Equivalentgewicht von 375.6 g erhalten.
Das Produkt wies nach der Herstellung eine Reinheit von 97 bis 98 Gewichts-% auf (bestimmt mittels Gaschromatographie). Nach 3 Monaten Lagerung unter Feuchtigkeitsausschluss bei Raumtemperatur war die Reinheit unverändert.

**Hydroxysilan *HS-5***: 2-Pyrrolidino-4(5)-(2-triethoxysilylethyl)cyclohexan-1-ol Wie für das Hydroxysilan ***HS-4*** beschrieben wurden 38.46 g CoatOSil^{®} 1770, 12.54 g Pyrrolidin und 0.10 g Lanthan(III)-triflat umgesetzt. Es wurde ein flüssiges Produkt mit einem theoretischen OH-Equivalentgewicht von 359.6 g erhalten, das nach einer Lagerzeit von 3 Monaten bei Raumtemperatur nicht merklich verändert war.

**Hydroxysilan *HS-6***: 2-(4-Methylpiperazino)-4(5)-(2-triethoxysilylethyl)cyclohexan-1-ol

Wie für das Hydroxysilan ***HS-4*** beschrieben wurden 38.46 g CoatOSil^{®} 1770, 17.64 g 4-Methylpiperazin und 0.10 g Lanthan(III)-triflat umgesetzt. Es wurde ein flüssiges Produkt mit einem theoretischen OH-Equivalentgewicht von 388.6 g erhalten, das nach einer Lagerzeit von 3 Monaten bei Raumtemperatur nicht merklich verändert war.

**Hydroxysilan *HS-7***: 2-Dibutylamino-4(5)-(2-triethoxysilylethyl)cyclohexan-1-ol Wie für das Hydroxysilan ***HS-4*** beschrieben wurden 38.46 g CoatOSil^{®} 1770, 22.76 g Dibutylamin und 0.10 g Lanthan(III)-triflat umgesetzt. Es wurde ein flüssiges Produkt mit einem theoretischen OH-Equivalentgewicht von 417.7 g erhalten, das nach einer Lagerzeit von 3 Monaten bei Raumtemperatur nicht merklich verändert war.

**Hydroxysilan** *HS-R1:* 1-Morpholino-3-(3-trimethoxysilylpropoxy)propan-2-ol In einem Rundkolben wurden wurden 28.36 g (120 mmol) 3-Glycidoxypropyltrimethoxysilan (Dynasylan^{®} GLYMO von Evonik Degussa), 12.55 g (144.1 mmol) wasserfreies Morpholin und 7.00 g wasserfreies Methanol unter Stickstoffatmosphäre während 5h bei 80 °C unter Rückfluss gerührt, bis mittels Gaschromatographie kein Reaktionsfortschritt mehr festgestellt wurde. Das Rohprodukt wurde während 30 Minuten bei 80°C und ca. 1 mbar nachbehandelt. Es wurde ein flüssiges Produkt mit einem theoretischen OH-Equivalentgewicht von 323.5 g erhalten.

Das Reaktionsprodukt wies nach der Herstellung eine Reinheit von 76 Gewichts-% und nach 1 Monat Lagerung unter Feuchtigkeitsausschluss bei Raumtemperatur eine Reinheit von 52 Gewichts-% auf (bestimmt mittels Gaschromatographie).

**Hydroxysilan *HS-R2:*** 1-Morpholino-3-(3-triethoxysilylpropoxy)propan-2-ol Wie für das Hydroxysilan ***HS-R1*** beschrieben wurden 33.41 g (120 mmol) 3-Glycidoxypropyl-triethoxysilan (Dynasylan^{®} GLYEO von Evonik Degussa), 12.55 g wasserfreies Morpholin und 7.00 g wasserfreies Ethanol umgesetzt. Es wurde ein flüssiges Produkt mit einem theoretischen OH-Equivalentgewicht von 365.5 g erhalten.

Das Reaktionsprodukt wies nach der Herstellung eine Reinheit von 94 Gewichts-% und nach 1 Monat Lagerung unter Feuchtigkeitsausschluss bei Raumtemperatur eine Reinheit von 83 Gewichts-% auf (bestimmt mittels Gaschromatographie).

Bei den Hydroxysilanen *HS-1* bis ***HS-7*** handelt es sich um erfindungsgemässe Hydroxysilane der Formel (I), bei den Hydroysilanen ***HS-R1*** und ***HS-R2*** um nicht erfindungsgemässe Hydroxysilane zu Vergleichszwecken.

Ein Vergleich der Reinheit der hergestellten und der gelagerten Hydroxysilane zeigt, dass die erfindungsgemässen Hydroxysilane ***HS-1*** (Trimethoxysilan) und ***HS-4*** (Triethoxysilan) eine sehr hohe Reinheit und hervorragende Lagerstabilität aufwiesen, während das Vergleichs-Hydroxysilan ***HS-R1*** (Trimethoxysilan) weder in befriedigender Reinheit hergestellt werden konnte noch lagerstabil war, und das Vergleichs-Hydroxysilan ***HS-R2*** (Triethoxysilan) zwar nach der Herstellung eine befriedigende Reinheit aufwies, aber nicht lagerstabil war.

### 2. Herstellung von Silangruppen-haltigen Polymeren

### Polymere SP-1 bis SP-7

Für jedes Polymer wurden 100 Gewichtsteile (GT) *Polymer-1* mit dem in der Tabelle 1 angegebenen Hydroxysilan in der angegebenen Menge vermischt (OH/NCO = 1.10). Diese Mischung wurde unter Stickstoffatmosphäre bei 90 °C gerührt, bis mittels IR-Spektroskopie keine Isocyanatgruppen mehr nachweisbar waren (ca. 2 Stunden). Anschliessend wurde die Reaktionsmischung abgekühlt und unter Ausschluss von Feuchtigkeit aufbewahrt.

Die **Viskosität** wurde jeweils am Folgetag der Herstellung auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei einer Temperatur von 20 °C gemessen.

Die Eigenschaften der erhaltenen Silangruppen-haltigen Polymere sind in der Tabelle 1 angegeben.

Bei den Polymeren ***SP-1*** bis ***SP-7*** handelt es sich um erfindungsgemässe Polymere mit Endgruppen der Formel (VI).

Das *Polymer-1* wurde hergestellt, indem 720 g Polyol Acclaim^{®} 12200 (Bayer Material Science; low monol Polyoxypropylendiol; OH-Zahl 11.0 mg KOH/g; Wassergehalt ca. 0.02 Gewichts-%), 34.5 g Isophorondiisocyanat (Vestanat^{®} IPDI, Evonik Degussa), 80.0 g Diisodecylphthalat und 0.2 g Dibutylzinndilaurat unter Stickstoffatmosphäre vermischt, unter stetigem Rühren auf 90 °C aufgeheizt und auf dieser Temperatur belassen wurden, bis der titrimetrisch bestimmte Gehalt an freien Isocyanatgruppen einen Wert von 0.73 Gewichts-% erreicht hatte. Das Produkt wurde auf Raumtemperatur abgekühlt und unter Ausschluss von Feuchtigkeit aufbewahrt.

**Tabelle 1: Zusammensetzung und Eigenschaften der Silangruppen-haltigen Polymere SP-1 bis SP-7.**

| **Polymer** | ***SP-1*** | ***SP-2*** | ***SP-3*** | ***SP-4*** | ***SP-5*** | ***SP-6*** | ***SP-7*** |
|---|---|---|---|---|---|---|---|
| *Polymer-1* | 100.00 | 100.00 | 100.00 | 100.00 | 100.00 | 100.00 | 100.00 |
| Hydroxysilan | ***HS-1,*** 6.38 | ***HS-2,*** 6.07 | ***HS-3,*** 7.18 | ***HS-4,*** 7.18 | ***HS-5,*** 6.88 | ***HS-6,*** 7.43 | ***HS-7,*** 7.99 |
| Viskosität [Pa·s] | 80 | 136 | 118 | 66 | 130 | 83 | 138 |

### 3. Herstellung von feuchtigkeitshärtenden Zusammensetzungen

### Zusammensetzungen Z-1 bis Z-7

Für jede Zusammensetzung wurden die in der Tabelle 2 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss vermischt und aufbewahrt. Jede Zusammensetzung wurde folgendermassen geprüft:
Zur Bestimmung der **Hautbildungszeit** wurden einige Gramm der Zusammensetzung in einer Schichtdicke von ca. 2 mm auf Pappkarton aufgetragen und
im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf Zugfestigkeit (Bruchkraft), Bruchdehnung und E-Modul (E-Modul bei 0.5-50 % Dehnung) geprüft.

Die Shore A-Härte wurde bestimmt nach DIN 53505 an während 14 Tagen im Normklima ausgehärteten Prüfkörpern.

Diese Resultate sind mit dem Zusatz "NK:" versehen.

Als Mass für die Wärmebeständigkeit wurden einige Hanteln, bzw. der Shore A-Prüfkörper, anschliessend an die 2 Wochen im Normklima zusätzlich während 1 Woche bei 90 °C in einem Umluftofen gelagert und anschliessend auf dieselbe Weise auf Zugfestigkeit, Bruchdehnung und E-Modul, bzw. auf Shore A-Härte, geprüft. Diese Resultate sind mit dem Zusatz "90 °C:" versehen.

Die Resultate sind in der Tabelle 2 angegeben.

**Tabelle 2: Zusammensetzung und Eigenschaften der Zusammensetzungen Z-1 bis Z-7.**

| **Zusammensetzung** | ***Z-1*** | ***Z-2*** | ***Z-3*** | ***Z-4*** | ***Z-5*** | ***Z-6*** | ***Z-7*** |
|---|---|---|---|---|---|---|---|
| Polymer | ***SP-1*,** 82.5 | ***SP-2,*** 82.5 | ***SP-3,*** 82.5 | ***SP-4,*** 82.5 | ***SP-5,*** 82.5 | ***SP-6*** 82.5 | ***SP-7,*** 82.5 |
| Silquest^{®} A-1120 ¹ | 3.8 | 3.8 | 3.8 | - | - | - | - |
| Geniosil^{®} GF-94 ² | - | - | - | 3.2 | 3.2 | 3.2 | 3.2 |
| Silquest^{®} A-171 ³ | 0.3 | 0.3 | 0.3 | - | - | - | - |
| Dynasilan^{®} VTEO ⁴ | - | - | - | 0.3 | 0.3 | 0.3 | 0.3 |
| DBTDL (10%) ⁵ | 0.4 | 0.4 | 0.4 | - | - | - | - |
| DBTDL (50%) ⁶ | - | - | - | 1.0 | 1.0 | 1.0 | 1.0 |
| Diisodecylphthalat | 13.0 | 13.0 | 13.0 | 13.0 | 13.0 | 13.0 | 13.0 |
| Hautbildungszeit [min] | 75 | 20 | 30 | 420 | 160 | 210 | 200 |
| **NK:** Shore A | 33 | 22 | 24 | 34 | 31 | 24 | 22 |
| Zugfestigkeit [MPa] | 0.58 | 0.37 | 0.42 | 0.35 | 0.55 | 0.53 | 0.43 |
| Bruchdehnung [%] | 102 | 103 | 113 | 92 | 90 | 95 | 100 |
| E-Modul [MPa] | 0.65 | 0.34 | 0.38 | 0.24 | 0.62 | 0.57 | 0.42 |
| **90°C:** Shore A | 36 | 21 | 24 | 33 | 33 | 32 | 28 |
| Zugfestigkeit [MPa] | 0.60 | 0.36 | 0.41 | 0.55 | 0.52 | 0.47 | 0.36 |
| Bruchdehnung [%] | 91 | 102 | 112 | 83 | 81 | 80 | 66 |
| E-Modul [MPa] | 0.66 | 0.32 | 0.36 | 0.68 | 0.62 | 0.57 | 0.47 |

| | | | | | | | |
|---|---|---|---|---|---|---|---|
| ¹ N-(2-Aminoethyl)-3-aminopropyltrimethoxysilan von Momentive ² N-(2-Aminoethyl)-3-aminopropyltriethoxysilan von Wacker ³ Vinyltrimethoxysilan von Momentive ⁴ Vinyltriethoxysilan von Evonik ⁵ Dibutylzinndilaurat 10 Gew.-% in Diisodecylphthalat ⁶ Dibutylzinndilaurat 50 Gew.-% in Diisodecylphthalat | | | | | | | |

### Zusammensetzungen Z-8 bis Z-14

Für jede Zusammensetzung wurden die in der Tabelle 3 angegebenen Inhaltsstoffe in den angegebenen Mengen (in Gewichtsteilen) in einem Vakuummischer bei 50 °C unter Feuchtigkeitsausschluss während 30 Minuten zu einer homogenen Paste verarbeitet und aufbewahrt. Jede Zusammensetzung wurde folgendermassen geprüft:

Die Hautbildungszeit, Zugfestigkeit, Bruchdehnung, E-Moduli und Shore A-Härte wurden bestimmt wie für die Zusammensetzung ***Z-1*** beschrieben. Für die Wärmelagerung wurden die Hanteln aber anschliessend an die 2 Wochen im Normklima während 4 Wochen bei 100 °C gelagert. Diese Resultate sind mit dem Zusatz "**100 °C:**" versehen.
Die Resultate sind in der Tabelle 3 angegeben.

Die *Thixotropierpaste* wurde hergestellt, indem in einem Vakuummischer 300 g Diisodecylphthalat (Palatinol^{®} Z, BASF) und 48g 4,4'-Methylendiphenyldiisocyanat (Desmodur^{®} 44 MC L, Bayer) vorgelegt und leicht aufgewärmt und anschliessend unter starkem Rühren 27 g Monobutylamin langsam zugetropft wurden. Die entstehende Paste wurde unter Vakuum und Kühlung eine Stunde weitergerührt.

**Tabelle 3: Zusammensetzung und Eigenschaften der Zusammensetzungen Z-8 bis Z-14.**

| **Zusammensetzung** | ***Z-8*** | ***Z-9*** | ***Z-10*** | ***Z-11*** | ***Z-12*** | ***Z-13*** | ***Z-14*** |
|---|---|---|---|---|---|---|---|
| Polymer | **SP-1,** 15.00 | ***SP-2,*** 15.00 | ***SP-3,*** 15.00 | ***SP-4,*** 15.00 | ***SP-5,*** 15.00 | ***SP-6*** 15.00 | **S*P-7,*** 15.00 |
| Diisodecylphthalat | 20.00 | 20.00 | 20.00 | 20.00 | 20.00 | 20.00 | 20.00 |
| *Thixotropierpaste* | 2.00 | 2.00 | 2.00 | 2.00 | 2.00 | 2.00 | 2.00 |
| Silquest^{®} A-171 ¹ | 1.00 | 1.00 | 1.00 | - | - | - | - |
| Dynasilan^{®} VTEO ² | - | - | - | 1.00 | 1.00 | 1.00 | 1.00 |
| Socal^{®} U 1 S2 ³ | 10.00 | 10.00 | 10.00 | 10.00 | 10.00 | 10.00 | 10.00 |
| Omyacarb^{®} 5 GU ⁴ | 50.00 | 50.00 | 50.00 | 50.00 | 50.00 | 50.00 | 50.00 |
| Dynasylan^{®} AMMO ⁵ | 0.75 | 0.75 | 0.75 | - | - | - | - |
| Dynasylan^{®} AMEO ⁶ | - | - | - | 0.75 | 0.75 | 0.75 | 0.75 |
| DBTDL (10%) ⁷ | 1.00 | 1.00 | 1.00 | - | - | - | - |
| Polycat^{®} DBU ⁸ | - | - | - | 0.20 | 0.20 | 0.20 | 0.20 |
| Tyzor^{®} IBAY ⁹ | - | - | - | 1.00 | 1.00 | 1.00 | 1.00 |
| Hautbildungszeit [min] | 25 | 10 | 5 | 270 | 185 | 55 | 80 |
| **NK:** Shore A | 41 | 32 | 27 | 32 | 29 | 31 | 23 |
| Zugfestigkeit [MPa] | 1.50 | 1.08 | 1.06 | 1.07 | 0.92 | 0.90 | 0.84 |
| Bruchdehnung [%] | 136 | 132 | 178 | 527 | 529 | 555 | 676 |
| E-Modul [MPa] | 1.20 | 0.77 | 0.65 | 0.75 | 0.61 | 0.58 | 0.38 |
| **100°C:** Shore A | 27 | 18 | 11 | 34 | 32 | 37 | 29 |
| Zugfestigkeit [MPa] | 0.87 | 0.55 | 0.41 | 0.88 | 0.81 | 1.02 | 0.80 |
| Bruchdehnung [%] | 85 | 83 | 79 | 100 | 85 | 121 | 134 |
| E-Modul [MPa] | 0.94 | 0.64 | 0.48 | 1.01 | 1.07 | 1.11 | 0.79 |

| | | | | | | | |
|---|---|---|---|---|---|---|---|
| ¹ Vinyltrimethoxysilan von Momentive ² Vinyltriethoxysilan von Evonik ³ gefälltes beschichtetes Calciumcarbonat von Solvay ⁴ Calciumcarbonat von Omya ⁵ 3-Aminopropyl-trimethoxysilan von Evonik ⁶ 3-Aminopropyl-triethoxysilan von Evonik ⁷ Dibutylzinndilaurat 10 Gew.-% in Diisodecylphthalat ⁸ 1,8-Diazabicyclo[5.4.0]undec-7-en von Air Products ⁹ Titan(IV)-Bis(ethylacetoacetato)-Komplex von Du Pont/Dorf Ketal | | | | | | | |

## Patentansprüche

1. Hydroxysilan der Formel (I), 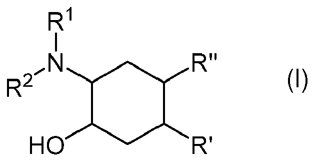 wobei
entweder R' für einen Rest der Formel (II) und R" für Wasserstoff oder R' für Wasserstoff und R" für einen Rest der Formel (II) stehen; 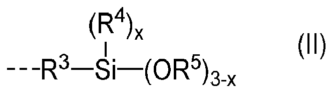 R¹ und R²
entweder einzeln jeweils für einen Alkylrest mit 1 bis 12 C-Atomen, welcher gegebenenfalls Heteroatome in Form von Ether-Sauerstoff, Thioether-Schwefel oder tertiärem Amin-Stickstoff aufweist,
oder zusammen für einen Alkylenrest mit 2 bis 12 C-Atomen, welcher gegebenenfalls Heteroatome in Form von Ether-Sauerstoff, Thioether-Schwefel oder tertiärem Amin-Stickstoff aufweist, stehen;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, steht;
R⁴ für eine Alkylgruppe mit 1 bis 8 C-Atomen steht;
R⁵ für eine Alkylgruppe mit 1 bis 10 C-Atomen, welche gegebenenfalls einen oder mehrere Ether-Sauerstoffe aufweist, steht; und
x für 0 oder 1 oder 2 steht.

2. Hydroxysilan gemäss Anspruch 1, **dadurch gekennzeichnet, dass** R¹ und R² entweder einzeln für 2-Methoxyethyl, 2-Ethoxyethyl, 3-Methoxypropyl, 3-Ethoxypropyl, 2-(2-Methoxyethoxy)ethyl, 2-Octyloxyethyl, Ethyl, Propyl, Isopropyl, Butyl, Isobutyl, sek.Butyl, 2-Ethylhexyl oder N,N-Dimethylaminopropyl stehen, oder zusammen unter Einbezug des Stickstoffatoms für einen, gegebenenfalls substituierten, Pyrrolidin-, Piperidin-, Hexamethylenimin-, Morpholin-, Thiomorpholin- oder 4-Methylpiperazin-Ring stehen.

3. Hydroxysilan gemäss einem der Ansprüche 1 oder 2, **dadurch gekennzeichnet, dass** R³ für einen Ethylenrest steht.

4. Hydroxysilan gemäss einem der Ansprüche 1 bis 3, **dadurch gekennzeichnet, dass** R⁵ für eine Methylgruppe oder eine Ethylgruppe steht.

5. Hydroxysilan gemäss einem der Ansprüche 1 bis 4, **dadurch gekennzeichnet, dass** x für 1 oder 0, insbesondere für 0, steht.

6. Verfahren zur Herstellung eines Hydroxysilans gemäss einem der Ansprüche 1 bis 5, **dadurch gekennzeichnet, dass** mindestens ein Epoxysilan der Formel (III) mit mindestens einem Amin der Formel (IV) umgesetzt wird.

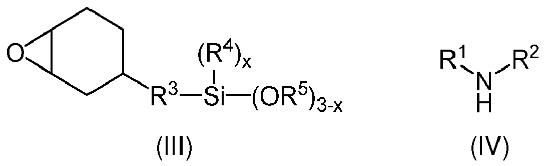

7. Addukt, erhalten aus der Umsetzung eines Hydroxysilans gemäss einem der Ansprüche 1 bis 5 mit mindestens einer Verbindung, die mindestens eine, bevorzugt mindestens zwei, Reaktivgruppen ausgewählt aus der Gruppe bestehend aus Isocyanat-, Epoxid-, Acryl-, Methacryl-, Anhydrid-, Carbonsäure-, Ester-, Carbonat- und Cyclocarbonat-Gruppen enthält.

8. Addukt gemäss Anspruch 7, **dadurch gekennzeichnet, dass** es ein Polymer mit Endgruppen der Formel (VI), welches frei ist von Isocyanatgruppen, darstellt.

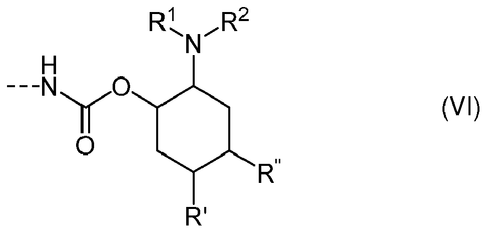

9. Addukt gemäss Anspruch 8, **dadurch gekennzeichnet, dass** das Polymer ein Molekulargewicht im Bereich von 1'000 bis 30'000 g/mol aufweist.

10. Addukt gemäss einem der Ansprüche 8 oder 9, **dadurch gekennzeichnet, dass** das Polymer mehrheitlich Polyoxyalkyleneinheiten aufweist.

11. Addukt gemäss einem der Ansprüche 8 bis 10, **dadurch gekennzeichnet, dass** die Endgruppen der Formel (VI) mehrheitlich an cycloaliphatische Reste gebunden sind.

12. Addukt gemäss einem der Ansprüche 8 bis 11, **dadurch gekennzeichnet, dass** das Polymer 1 bis 4 Endgruppen der Formel (VI) aufweist.

13. Verwendung eines Hydroxysilans oder eines Addukts davon gemäss einem der Ansprüche 1 bis 5 oder 7 bis 12 als Bestandteil einer härtbaren Zusammensetzung.

14. Verwendung gemäss Anspruch 13, **dadurch gekennzeichnet, dass** die härtbare Zusammensetzung einen elastischen Klebstoff und/oder Dichtstoff darstellt.

15. Artikel erhalten aus einer Verwendung gemäss einem der Ansprüche 13 oder 14.
